Europäisches Patentamt

European Patent Office

Office européen des brevets

(19)

(11) Veröffentlichungsnummer: **0 376 019**
**A1**

## (12) EUROPÄISCHE PATENTANMELDUNG

(21) Anmeldenummer: 89122639.1

(22) Anmeldetag: 08.12.89

(51) Int. Cl.5: **B66B 1/34, G01G 19/18, G01L 5/10**

(30) Priorität: 21.12.88 DE 3843044

(43) Veröffentlichungstag der Anmeldung:
**04.07.90 Patentblatt 90/27**

(84) Benannte Vertragsstaaten:
**AT BE CH DE ES FR GB GR IT LI LU NL SE**

(71) Anmelder: **SIEMAG TRANSPLAN GMBH**
**Obere Industriestrasse 8**
**D-5902 Netphen(DE)**

(72) Erfinder: **Simmich, Klaus, Dipl.-Ing.**
**Hömbergstrasse 24**
**D-5902 Netphen 1(DE)**
Erfinder: **Schülke, Ralf**
**Weistalstrasse 7**
**D-5900 Siegen(DE)**

(74) Vertreter: **Grosse, Dietrich, Dipl.-Ing. et al**
**Patentanwälte**
**HEMMERICH-MÜLLER-GROSSE-POLLMEIER--**
**MEY-VALENTIN Hammerstrasse 2**
**D-5900 Siegen 1(DE)**

(54) **Vorrichtung zur Ermittlung von ein Seil beaufschlagenden Seilkräften.**

(57) Um Seilkräfte zum Abgleich von Seilspannungen und/oder zur Ermittlung von die Seile belastenden Gewichten bestimmen zu können, wird die Aufhängung der Seile über einen Meßring geführt, der durch Durchbrechungen in eine Innen- und eine Außenbuchse so unterteilt ist, daß die Innenbuchse über im wesentlichen horizontal verlaufende Brücken mit der Außenbuchse verbunden und damit elastisch in dieser gehalten ist. Durch den Brücken zugeordnete Dehnungsmeßstreifen lassen sich Verformungen der Brücken unter Einwirkung von der Innen- zur Außenbuchse übertragenen Kräften ebenso ermitteln wie gegebenenfalls durch den vertikalen Abstand der Buchsen überwachende, induktiv und/oder kapazitiv wirksame elektronische Abstandsgeber. Die derart erfaßten Seilkräfte lassen sich zum Abgleich der Seilkräfte verwenden, und es ist auch möglich, die jeweilige Gesamtbelastung, aufgebrachte Gewichte oder dergleichen gegebenenfalls kontinuierlich zu überwachen.

Fig.1

## Vorrichtung zur Ermittlung von ein Seil beaufschlagenden Seilkräften

Die Erfindung betrifft eine Vorrichtung zur Angabe der ein Seil einer Schachtförderanlage, einer Hebevorrichtung oder dergleichen beaufschlagenden Seilkraft.

Bei Mehrseilanlagen werden üblicherweise die Förder- bzw. Tragseile vermittels von Seilgeschirren direkt an den Aufhängeblechen der Fördermittel angeschlagen. Um eine gleichmäßige Auslastung der Seile zu erreichen und Überbelastungen einzelner Seile auszuschließen ist es erforderlich, die im Betriebe auftretenden Seilspannungen zu ermitteln. Im einfachsten Falle werden die Seile, bspw. mittels eines Hammerschlages, in Schwingungen versetzt. Diese Schwingungen laufen bis zum gegenüberliegenden Seilanschlag und werden dort reflektiert, so daß sich ihre Laufzeit erfassen läßt und als Basis für die Bestimmung der einzelnen Seilzugspannungen nutzen läßt. Die Messungen lassen sich nur von Fall zu Fall mit relativ großem Aufwande durchführen, und oft angestrebte beliebige bzw. kontinuierliche Messungen sind nicht möglich.

Es ist auch möglich, die einzelnen Seile jeweils an Meßvorrichtungen, bspw. Schlitzringdynamometer, anzuhängen, deren Weitung sich vermittels von Mikrometerschrauben ausmessen und vermittels von Eichkurven auswerten läßt. Auch hier gestaltet sich die Meßwertermittlung ebenso umständlich wie die Auswertung durchgeführter Messungen, und bspw. nach einer Seillängenkorrektur aufgrund durchgeführter Messungen sind weitere umständliche Kontrollmessungen erforderlich.

Es wurde auch bereits eine elektronische Seilkraftmessung vorgeschlagen, bei der quer zur Laufrichtung des Seiles durch Auslenkung entstehende Kräfte auf einen Zugstab übertragen werden, der mit Spannungsmeßelementen bestückt ist. Nachteilig machen sich der komplizierte Aufbau und der relativ große zusätzlich erforderliche Raum bemerkbar.

Die Erfindung geht daher von der Aufgabe aus, eine Vorrichtung der beschriebenen Gattung zu schaffen, die bei geringem Aufwand keinen wesentlichen zusätzlichen Raumbedarf hat und in der Lage ist, Meßwerte zu beliebig abrufbaren Zeitpunkten bzw. kontinuierlich zu ermitteln.

Gelöst wird diese Aufgabe mit den Merkmalen des Patentanspruches 1. Es ergibt sich ein Meßring, der problemlos direkt in das Aufhängeblech für übliche Seilgeschirre einsetzbar ist, und der sich somit praktisch ohne Nutzung zusätzlichen Raumes geschützt unterbringen läßt. Damit besteht auch die Möglichkeit, bereits bestehende Schachtförderanlagen, Hebezeuge oder dergleichen mit nur geringen zusätzlichen Arbeiten mit der nach der Erfindung gestalteten Vorrichtung auszustatten, und gleichzeitig lassen sich Messungen zu beliebig gewählten Zeitpunkten, gegebenenfalls auch kontinuierlich, durchführen, so daß Messungen der Seilkraft zu beliebigen Zeiten ohne große Vorbereitungen, Schutzmaßnahmen oder dergleichen mit geringem Aufwande durchführbar sind.

Zweckmäßige und vorteilhafte Weiterbildungen der Erfindung sind den Unteransprüchen entnehmbar.

Erläutert sind die Merkmale der Erfindung anhand der Beschreibung von Ausführungsbeispielen in Verbindung mit diese darstellenden Zeichnungen. Es zeigen hierbei

Figur 1 die Ansicht eines Meßringes,

Figur 2 Schnitte entlang der gebrochenen Ebene II der Fig. 1, und

Figur 3 ein Beispiel für die Aufhängung eines fünf Seile umfassenden Seilgeschirres.

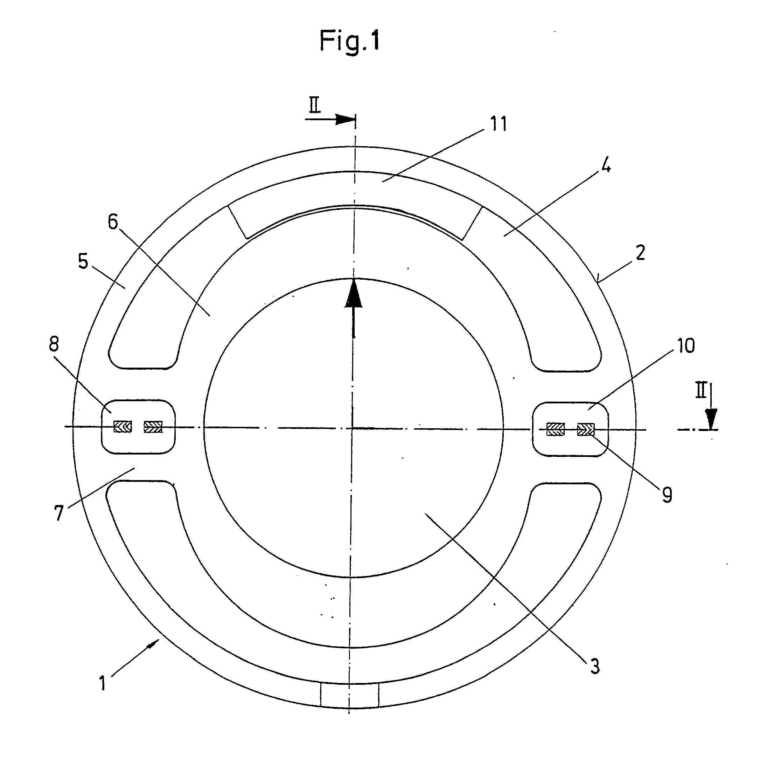

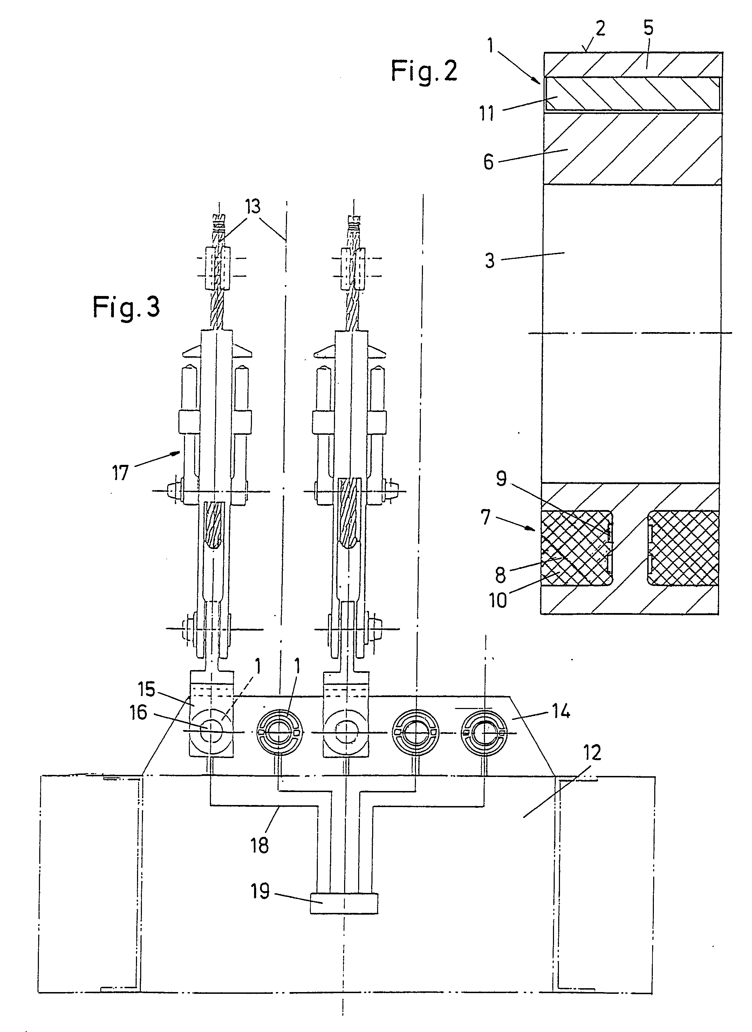

In der Fig. 1 ist die Seitenansicht eines Meßringes 1 gezeigt, der mit seinem Mantel 2 direkt in ein Aufhängeblech, bspw. einer Schachtförderanlage, einsetzbar ist, während seine Bohrung 3 von einem Bolzen durchgriffen ist, welcher das Seilgeschirr trägt. Durch zwei sich über mehr als 140° erstreckende und mit ihrer Sehne horizontal angeordnete, nahezu halbkreisförmige Durchbrechungen 4 wird der Meßring in eine Außenbuchse 5 und eine Innenbuchse 6 aufgeteilt, wobei die Außen- und die Innenbuchse einstückig durch radial in Achshöhe verlaufende Brücken 7 miteinander verbunden sind. Es hat sich bewährt, diese Brücken, wie auch der Schnitt nach Fig. 2 zeigt, mittig durch Ausnehmungen 8 zu schwächen, so daß die Brücken ein I-Profil aufweisen.

Auf dem Grunde der Ausnehmungen 8 sind die Brücken mit Dehnungsmeßstreifen 9 ausgestattet, welche Verspannungen der Brücke zu erfassen vermögen. Die Ausnehmungen sind, u.a. auch zum Schutze der Dehnungsmeßstreifen, durch eine Vergußmasse 10 aufgefüllt. Um einerseits den Hub der Innenbuchse 6 gegenüber der Außenbuchse 5 zu begrenzen und andererseits auch im Falle von Überlastungen die Innenbuchse ab fangen zu können, ist der obere Bereich der Außenbuchse 5 mit einem den oberen Bereich der Innenbuchse 6 gegenüberstehenden Druckstück 11 ausgestattet.

Der praktische Einsatz des Meßringes soll anhand der Fig. 3 erläutert werden. Hier ist als Beispiel schematisch ein Fördergefäß 12, ein Förderkorb oder dergleichen, dargestellt, das von fünf Seilen 13 getragen wird. Das Fördergefäß 12 ist mit einem Aufhängeblech 14 versehen, in das, entsprechend der Anzahl der Seile 13, fünf Meßringe 1 so eingesetzt sind, daß ihre Mäntel 2 praktisch spielfrei aufgenommen werden. Seitlich umgriffen wird das Aufhängeblech 14 mit den Meßringen 1 jeweils von Gabeln 15, die von Bolzen 16 durchgriffen werden, die sich auch durch die Bohrungen 3 der Innenbuchsen 6 der Meßringe 1 erstrecken. An die Gabeln 15 sind die Seilklemmkauschen 17 so angelenkt, daß die Seile an die Meßringe 1 und das Aufhängeblech 14 kardanisch angreifen. Die Dehnungsmeßstreifen 9 der Meßringe 1 sind über Leitungen 18 mit einer Auswertvorrichtung 19 verbunden.

Werden nun Seile belastet, so übertragen sie die Seillast über die Bolzen 16 auf die Innenbuchse 6 der Meßringe 1 und verformen hierbei die die Innenbuchsen 6 innerhalb der Außenbuchsen 5 abstützenden Brücken 7. Diese Verformung wird mittels Dehnungsmeßstreifen 9 ermittelt und in der Auswertvorrichtung 19 erfaßt.

Es besteht hierbei die Möglichkeit, einerseits nur nacheinander oder auch parallel die einzelnen Seilkräfte zu erfassen, um einen Abgleich der Seillängen im Sinne einer gleichmäßigen Belastung der Seile durchführen zu können. Es besteht aber auch die Möglichkeit, innerhalb der Auswertvorrichtung die Summe der Seilkräfte festzustellen und hiervon gewisse Gewichte, bspw. die Gewichte von Seillängen, das Gewicht des Fördergefäßes oder dergleichen abzuziehen, so daß es möglich wird, sowohl die die Seile belastende Gesamtkraft festzustellen als auch auf bzw. in das Fördergefäß verbrachte Lasten. Insbesondere letztes gestaltet sich relativ einfach, da aus den Meßspannungen der Meßringe hierbei nur die Gesamtkraft abzuleiten ist und von der nach der Beladung sich ergebenden Gesamtkraft die vor der Beladung bestehende Kraft abzuziehen ist. Die bei der Saldierung sich ergebende Kraft entspricht hierbei dem Gewicht der aufgebrachten Masse.

Als vorteilhaft wurde empfunden, daß die Meßringe bei einer derartigen Anordnung geschützt in Ausnehmungen des Aufhängebleches 14 untergebracht sind, während sie gleichzeitig frontal durch die Schenkel der Gabeln 15 übergriffen sind. Damit ergibt sich nicht nur eine praktisch kaum zusätzlichen Raum beanspruchende Unterbringung, die Anordnung zeichnet sich auch dadurch aus, daß der schon an sich nicht sehr empfindliche Meßring verdeckt und damit geschützt montiert ist, ohne daß im Bedarfsfalle seine Auswechselbarkeit beeinträchtigt wird.

**Ansprüche**

1. Vorrichtung zur Angabe der ein Seil einer Schachtförderanlage, einer Hebevorrichtung oder dergleichen beaufschlagenden Seilkraft,
**dadurch gekennzeichnet,**
daß sie als Meßring (1) ausgebildet ist, der durch sich horizontal erstreckende, nahezu halbkreisförmige Durchbrechungen (4) in eine Außenbuchse (5) sowie eine in dieser durch zwei horizontal gerichtete Brücken (7) getragenen Innenbuchse (6) unterteilt ist, und daß der Meßring (1) mit gegenseitige vertikale Verlagerungen der Innen- gegen die Außenbuchse (5, 6) und/oder Verspannungen der Brücken (7) erfassenden Gebern ausgestattet ist.

2. Vorrichtung nach Anspruch 1,
**dadurch gekennzeichnet,**
daß die Brücken (7) mit Verspannungen derselben erfassenden Dehnungsmeßstreifen (9) versehen sind.

3. Vorrichtung nach Anspruch 2,
**dadurch gekennzeichnet,**
daß die Brücken (7) mit Ausnehmungen (8) versehen sind, deren Grund die Dehnungsmeßstreifen (9) aufnimmt.

4. Vorrichtung nach Anspruch 3,
**dadurch gekennzeichnet,**
daß die Ausnehmungen (8) durch eine die Dehnungsmeßstreifen (9) schützende elastische Vergußmasse (10) abgedeckt sind.

5. Vorrichtung nach einem der Ansprüche 1 bis 4,
**dadurch gekennzeichnet,**
daß vorzugsweise die Außenbuchse (5) mit einem den Hub der Innenbuchse (6) begrenzenden Druckstück (11) ausgestattet ist.

6. Vorrichtung nach einem der Ansprüche 1 bis 5,
**dadurch gekennzeichnet,**
daß zwischen der Innenbuchse (6) und der Außenbuchse (5) mindestens ein induktiv und/oder kapazitiv wirksamer Abstandgeber vorgesehen ist.

7. Anwendung von Meßringen nach einem der Ansprüche 1 bis 6 zum Abgreifen von Seilspannungen.

8. Anwendung von Meßringen nach einem der Ansprüche 1 bis 7 zur Erfassung von Summen von Seilkräften zur Ermittlung von Gewichtsbelastungen.

# Fig.1

Fig. 2

Fig. 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | GB-A-1081907 (STOTHERT AND PITT LTD)<br>* das ganze Dokument * <br>--- | 1 | B66B1/34<br>G01G19/18<br>G01L5/10 |
| A | FR-A-2443055 (PRECILEC)<br>* das ganze Dokument *<br>--- | 1 | |
| A | DE-A-3307020 (ASEA)<br>* Anspruch 1; Figuren 1, 2, 4 *<br>--- | 1 | |
| A | CH-A-477356 (BBC)<br>* das ganze Dokument *<br>--- | 1 | |
| A | US-A-4283942 (S.S. FISHFADER)<br>* Zusammenfassung; Figuren 1-4 *<br>--- | 1 | |
| A | IBM TECHNICAL DISCLOSURE BULLETIN.<br>vol. 16, no. 7, Dezember 1973, NEW YORK US<br>Seiten 2267 - 2268; R.E. ELLIS:<br>"WEB TENSION SENSOR"<br>* das ganze Dokument *<br>----- | 1 | |

**RECHERCHIERTE SACHGEBIETE (Int. Cl.5 )**

B66B
G01G
G01L

Der vorliegende Recherchenbericht wurde für alle Patentansprüche erstellt

| Recherchenort | Abschlußdatum der Recherche | Prüfer |
|---|---|---|
| DEN HAAG | 03 APRIL 1990 | ZAEGEL B.C. |